# EUROPEAN PATENT SPECIFICATION

(11) **EP 1 054 783 B1**
(45) Date of publication and mention of the grant of the patent: **26.04.2006**
(21) Application number: 99908251.4
(22) Date of filing: 19.02.1999
(51) Int. Cl.: B60C 25/135, B60C 25/138

(54) **ROBOTIC APPARATUS AND METHOD FOR ASSEMBLING A TIRE TO A RIM**
ROBOTERANLAGE UND VERFAHREN ZUM AUFBAUEN EINES FAHRZEUGREIFENS AN EINER FELGE
ROBOT ET PROCEDE D'ASSEMBLAGE D'UN PNEU A UNE JANTE

(30) Priority: 20.02.1998 US 75355 P; 01.06.1998 US 88357
(43) Date of publication of application: 29.11.2000
(73) Proprietor: Burke E. Porter Machinery Company, Grand Rapids, MI 49505 (US)
(72) Inventor: KANE, John, P., Sterling Heights, MI 48312 (US); SACHS, Karl, D., Birmingham, MI 48009 (US)
(74) Representative: Pfenning, Meinig & Partner GbR
(86) International application number: PCT/US1999/003557
(87) International publication number: WO 1999/042309

(56) References cited:
- US-A- 3 877 505
- No relevant documents have been disclosed.

## Description

### FIELD OF THE INVENTION

The present invention relates to a tire mounting apparatus for assembling a tire to a rim in an automated fashion with programmable movement capable of adapting for different size tires and rims on the same production line, and to a method for mounting a tire on a rim.

### BACKGROUND OF THE INVENTION

Previous devices and methods have been proposed for mounting vehicle tires on rims when automatic means are used to spread the tire bead and force the tire over the rim to produce the assembling operation. In the state of the known devices, the rim is mounted on a conveyor, and a tire is supported on the rim in a preliminarily assembled relationship. The rim and tire are then moved to the mounting apparatus. The mounting apparatus spreads the bead of the tire and forces the tire over the wheel rim to locate the tire between the wheel rims so that the tire is then ready for inflation. In the case of a tube-type tire, an additional step is required in order to place and locate the tube within the tire carcass.

The tubeless tire configuration has been conventional in the art for an extended period of time, however in recent years the diameter of the rims, width of the tires and height of the tires have been subject to enormous variation and different combinations in an attempt to design a vehicle tire suited to a particular vehicle model having the desired handling and performance characteristics sought by the purchasing public. In view of the wide variety of vehicle tire and rim configurations, it has been difficult to provide an automatic mounting device capable of adapting to various rim sizes and wheel sizes in different combinations without undue downtime in order to reconfigure the tire mounting head for the specific size of rim and tire to be assembled. Therefore, it is the object of the invention to provide a tire mounting apparatus and method capable of efficient, rapid and economical operation when faced with a variety of rim sizes and tire sizes on the same tire mounting production line.

US-A-3 877 505 discloses an upper bead breaker mechanism for an automatic tire changer machine, which is adapted to break a tire's upper bead away from a wheel's upper rim when the wheel is positioned on the machine table. The mechanism comprises a blade adapted to move downwardly along a programmed and controlled path which includes a first downward segment relative to the plane of the table that locates the blade's lip beneath the wheel rim's flange from an initial operational position where said blade rests on the tire's side wall, a second radially inward segment relative to said wheel that locates the blade's lip over the tire's bead, and a third downward segment relative to the plane of said table that breaks the tire's bead away from the wheel's rim.

### SUMMARY OF THE INVENTION

The above object of the invention is solved by an apparatus comprising the features of claim 1 and a method comprising the features of claim 24, respectively. Preferred embodiments are defined in the respective subclaims.

The present invention provides a tire mounting apparatus and method which is continuous and automatic, efficient, rapid and economical in operation. The apparatus includes a robot preferably having at least one articulated joint and a wrist. The robot can be moveable with at least three degrees of freedom along at least one of a plurality of programmable predetermined paths. The predetermined path can include varying one or more of the three dimensional positions of the path, as well as one or more of the three orientations of the tool, during a single cycle or rotation. A central processing unit can selectively execute any one of the plurality of programmable predetermined paths stored in memory. A bead mounting tool is attachable to the wrist of the robot for movement along the selected one of the plurality of programmable predetermined paths of the robot. The tool can be oriented with at least three degrees of freedom independent of the selected one of the plurality of programmable predetermined paths. A workpiece support can position the rim in a predetermined location with respect to the robot and positions the tire in a predetermined orientation with respect to the rim. Means for generating at least one signal to the robot can be provided, where the signal corresponds to a size of the rim and tire. The central processing unit can select one of the plurality of programmable predetermined paths corresponding to the rim and tire size indicated by the signal. This configuration permits the central processing unit or robot to sense the rim and tire size, or to receive other input corresponding to the rim and tire size in order to adapt "on-the-fly" to various rim and tire sizes being produced on the production line. The apparatus can also allow the control of the bead mounting tool to be infinitely variable, such that the elevation, angle and/or pitch of the tool can be changed during its path around the outer periphery of the rim for a particular rim and tire size configuration, and/or the three dimensional path of the tool can be changed to accommodate the particular rim and tire size being mounted. By way of example and not limitation, the path of the tool can be programmed to be either elliptical or circular, or curved in three dimensions (e.g. x-axis, y-axis, and z-axis) as required to effectively mount a particular rim and tire size configuration, while the orientation of the tool can be programmed to change during a single cycle from a pitch of 0° with respect to a vertical axis to a pitch of 45° with respect to the vertical axis, while maintaining the yaw angle at a substantially constant angle with respect to the vertical axis or changing the yaw angle with respect to the vertical axis, as the rotational orientation of the tool about the vertical axis changes (e.g. rotating through 360°) to maintain a substantially consistent presentation of the tool face with respect to the rim.

Preferably, the path of the tool is designed and selected to provide the minimum resistance to mounting a particular rim and tire size combination. It is also desirable in the present invention to monitor the internal load sensing functions built into typical robotic drives or arms and compare the sensed load to a predetermined value. The load sensors can take the form of current sensors for the motors driving the movement of the various joints, and/or stress and strain gauges mounted at appropriate locations on the robotic arm, or combinations thereof. In the preferred configuration, the current used to power the motors responsible for moving the joints of the robotic arm are monitored and compared to predetermined values in order to determine if a load greater than the predetermined value is experienced as the bead mounting tool is moved in the selected programmable path for mounting the rim and tire combination. It is desirable in the present invention to diagnose if there is a processing problem. By way of example and not limitation, a processing problem can include an incompatible combination of tire and rim (e.g. tire too big for rim, tire too small for rim, missing rim, missing tire, etc.), or lubrication problems, such as a soaper malfunction. The processing problem can be diagnosed by sensing the load required to move the tool along the selected programmed path for the particular rim and tire size combination. It is also desirable to program the least resistance path in order to provide less stress on the tire as it is mounted on the rim to produce the assembled wheel ready for inflation. Furthermore, it is desirable in the present invention to provide a closed loop feedback system not available in prior known tire mounting systems.

Other objects, advantages and applications of the present invention will become apparent to those skilled in the art when the following description of the best mode contemplated for practicing the invention is read in conjunction with the accompanying drawings.

### BRIEF DESCRIPTION OF THE DRAWINGS

The description herein makes reference to the accompanying drawings wherein like reference numerals refer to like parts throughout the several views, and wherein:
Figure 1 is a detailed cross-sectional view of a bead mounting tool engaging a side wall of a tire for mounting on a rim according to the present invention;
Figure 2 is a simplified schematic view of a robot for moving the bead mounting tool along selected programmable paths for mounting the tire on the rim and a schematic representation of control means for controlling the robot positioned at the tire mounting work station of a wheel assembly line;
Figure 3 is a detailed perspective view of the bead mounting tool;
Figure 4 is a flow diagram illustrating the steps for setting up programmable paths and/or orientations and/or load limits for the bead mounting tool as the tool moves along the path for each tire and rim size combination to be assembled; and
Figure 5 is a flow diagram illustrating the method of assembling various rim and tire size combinations being produced on the production line "on-the-fly".

### DESCRIPTION OF THE PREFERRED EMBODIMENT

The present invention discloses a robotic apparatus 10 and method for assembling a tire 12 to a rim 14 to produce an assembled wheel ready for inflation. A tire mounting station 16 is provided where the robotic apparatus 10 is positioned in a predetermined location with respect to a tire 12 and rim 14 combination to be assembled. The tire mounting station 16 can be formed as a "stand-alone" mounter, or in combination with a "pick-and-place" apparatus for the tire and rim, or as part of a pallet conveyor system designated generally 18 of conventional construction which is driven in intermittent movement. The "stand-alone" mounter can require manual positioning of the rim and tire at the tire mounting station 16. The "pick-and-place" apparatus can be separate from the robotic apparatus 10, or can be in the form of an interchangeable "pick-and-place" end effector for the robotic apparatus 10. For purposes of illustration, the pallet conveyor system 18 is of conventional, well known construction and carries a plurality of spaced pallets which in turn carry a wheel 20 for assembly of the tire 12 with respect to the rim 14 of the wheel 20.

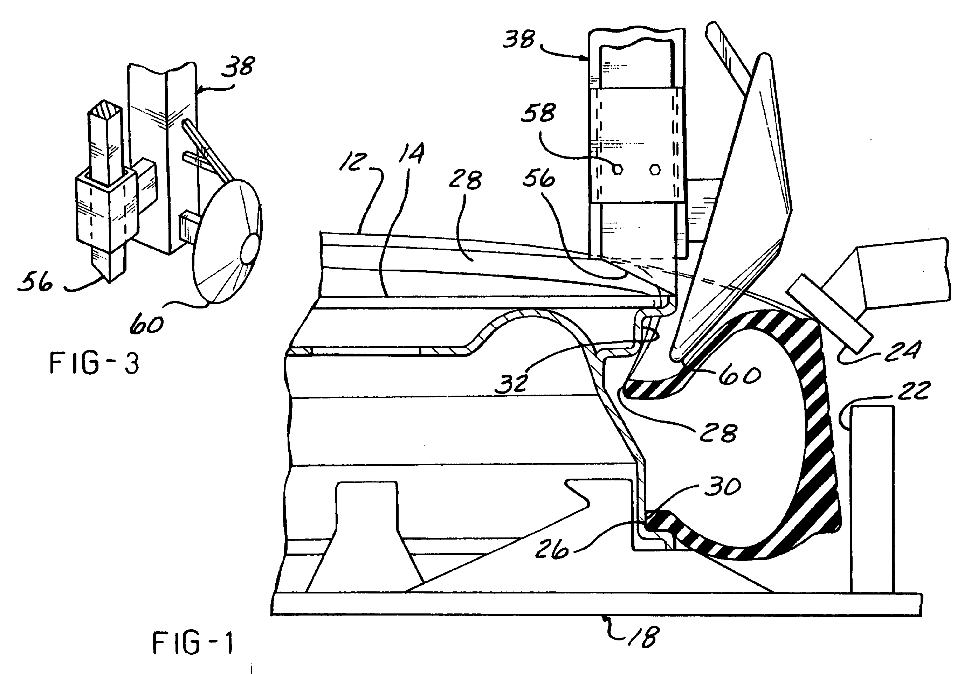

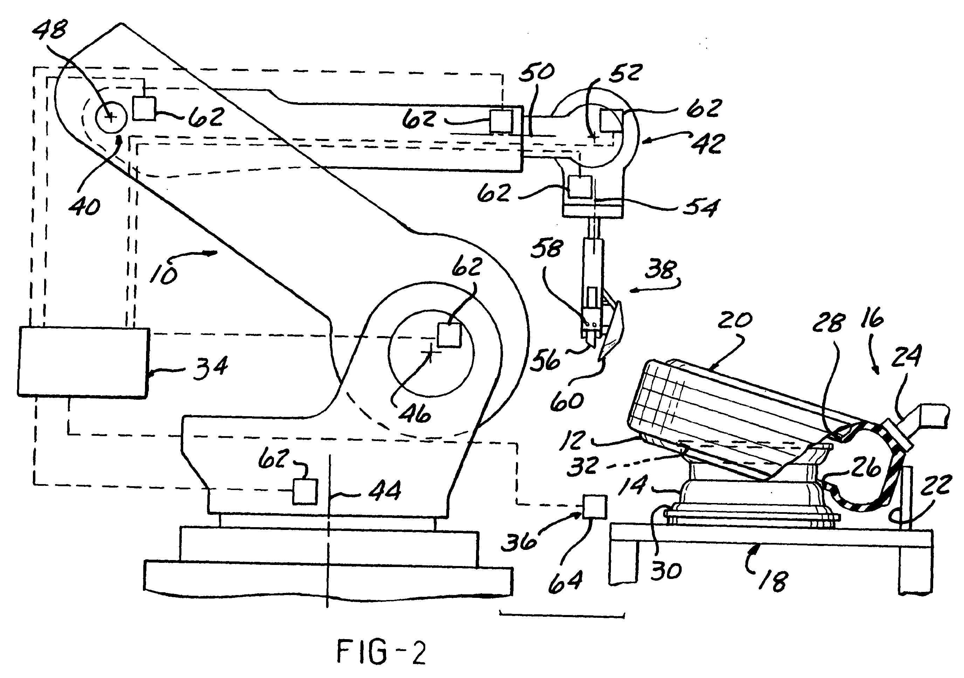

At some point on the pallet conveyor system 18, upstream from the tire mounting station 16 or at the tire mounting station 16 immediately prior to activation of the robotic apparatus 10, a tubeless tire 12 is rested in a predetermined inclined position on the rim 14 of the wheel 20 (e.g. by manual positioning, or by positioning with an automated apparatus, such as with a "pick-and-place" machine, or by positioning with a robotic apparatus having a "pick-and-place" end effector). The inclined position of the tire 12 on the rim 14 can be such as that shown in Figures 1 and 2. The edge of the wheel can be resting against a seat 22. The rim 14 of the wheel 20 is held in a non-rotatable predetermined position with respect to the robotic apparatus 10. The tire 12 of the wheel 20 is held in a non-rotatable position by a tire-engaging clamp 24. The conveyor 18 is driven in step by step movement to advance the pallets to a series of work stations, where the tire mounting station 16 is illustrated in Figures 1 and 2, and to stop the pallets at each work station for a predetermined time period between successive steps of movement, which time period is employed to perform a work operation on the tire 12 and rim 14 of the wheel 20 supported on the pallet.

At some point on the conveyor 18 upstream from the tire mounting station 16, the tire 12 and rim 14 are soaped as is conventional. The soaper can be of well known construction by those skilled in the art. As is also conventional and well known in the art, it has been found that adequate soaping of the beads 26, 28 of the tire and/or seats 30, 32 of the rim 14 is required in order to provide sufficient lubrication for movement of the beads 26, 28 over the rim 14 in order to engage the seats 30, 32 of the rim 14 without damaging the tire 12. In the mechanical tire mounting systems used in the past, it has been difficult, if not impossible, to determine if there has been a previous failure of the soaping mechanism prior to the destruction or damage of one or more tires being engaged by the tire mounting mechanism. Except for expensive vision systems or manual inspection, it has also been difficult to determine if the correct size combination of tire and rim have been arranged properly for the mounting procedure.

In the preferred configuration of the present invention, control means 34 is provided for receiving input signals and processing information according to a program stored in memory. The control means 34 can include a microprocessor or central processing unit for executing the instructions from programs stored in memory. The control means 34 can receive input from a suitable device 36 corresponding to the size of a tire 12 and rim 14 positioned at the tire mounting station 16 for assembly. Based on the tire/rim size input signal, the control means 34 selects an appropriate programmable predetermined path for the bead mounting tool 38 to mount the particular size tire 12 and particular size rim 14 with respect to one another corresponding to the tire and rim size combination indicated by the input signal. Preferably, the control means 34 of the present invention can be preprogrammed with a plurality of programmable predetermined paths for the bead mounting tool 38 corresponding to various sizes of tire and rim combinations. This allows the robotic wheel assembly apparatus according to the present invention to adapt to the particular tire and rim size combination positioned at the tire mounting station "on-the-fly" for increased productivity by eliminating downtime to reconfigure the tire mounting apparatus for a new tire and rim size combination.

In addition, the configuration of the present invention permits the robotic apparatus to be controlled according to a programmable predetermined path selected by the control means 34 matching the particular tire 12 and rim 14 size combination currently positioned at the tire mounting station 16, and at the same time selecting a programmable predetermined orientation of the bead mounting tool 38 as the tool travels along the particular selected programmable predetermined path. This permits customization of both the path and the orientation of the bead mounting tool 38 in order to achieve a mounting cycle for the tire 12 to the rim 14 with a resistance force or load that is less than a predetermined resistance force or load value for the particular tire and rim size combination in order to keep the stress on the tire below the predetermined value. This flexibility in programming the path, orientation and maximum resistance load values along the path of travel of the tool eliminates any damage to the tire during the mounting procedure by stopping further movement of the tool 38 along the predetermined path of travel and orientation if the resistance exceeds a programmable predetermined value.

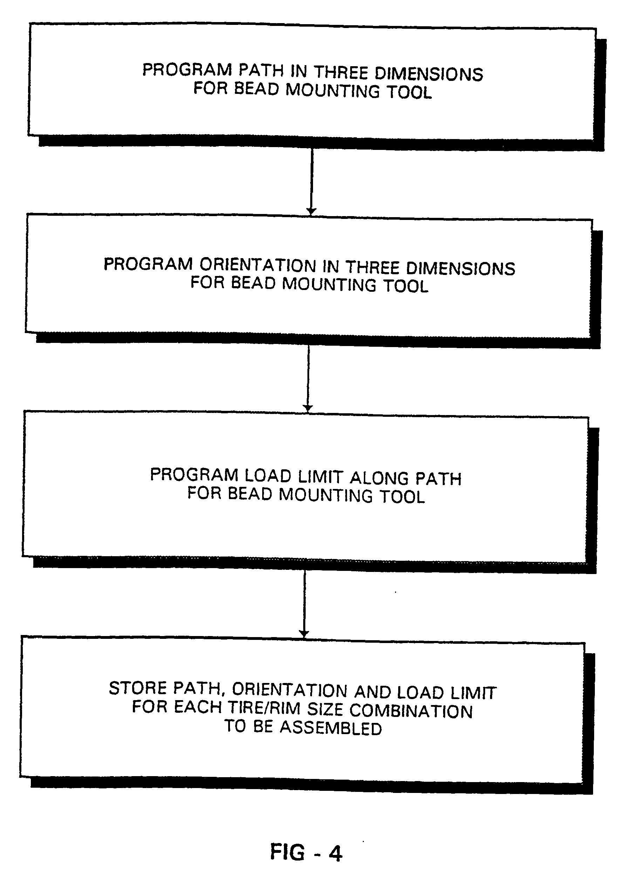

The robotic apparatus 10 preferably includes at least one articulated joint 40 and a wrist 42. The robotic apparatus 10 is capable of movement with at least three degrees of freedom along a selectable one of a plurality of programmable predetermined paths. This type of robotic apparatus is conventional and well know to those skilled in the art. By way of example and not limitation, a suitable robotic apparatus 10 for use in the present invention can be obtained from Nachi Robotic Systems, Inc. of Novi, Michigan. A bead mounting tool 38 is attachable to the wrist of the robot 10 for movement along a selected one of a plurality of programmable predetermined paths of the robot. The tool 38 is orientatable with at least three degrees of freedom independent of the selected one of the plurality of programmable predetermined paths of the robot. By way of example and not limitation, the robot 10 is moveable with at least three degrees of freedom by rotation of the base about a first axis 44, a second axis 46, and a third axis 48, as best seen in Figure 2. The orientation of the tool is controlled by movement of the outer end of the robot 10 by rotation about a fourth axis 50, a fifth axis 52, and a sixth axis 54. As best seen in Figures 2 and 3, the bead mounting tool 38 includes a rim-engaging portion 56. The rim-engaging portion 56 locates the tool 38 with respect to the rim 14, and preferably is adjustable by set screws 58 to adjust the depth of penetration of a tire-side-wall-engaging portion or disc 60 with respect to the rim 14.

The present invention preferably includes one or more sensors 62 for monitoring the load of each articulated joint 40 and/or wrist 42 of the robot 10. The sensor 62 can include one or more current monitors, stress/strain gauges, and/or a combination of the two capable of generating a signal corresponding to the load imposed on the bead mounting tool 38, as the tool engages the tire 12 for mounting the first and second beads 26, 28 on the rim 14. One or more sensors 62 can send a signal to the control means 34 corresponding to the load imposed on the bead mounting tool 38, as the tool moves along the predetermined path and orientation selected for the particular tire 12 and rim 14 size combination currently positioned at the tire mounting station 16. The control means 34 compares the measured load from the sensors 62 to a predetermined value at each position or along each portion of the programmed path to determine if the load has increased to a value greater than a predetermined value. If the measured load exceeds the predetermined value, the control means 34 immediately stops movement of the bead mounting tool 38 in order to prevent damage to the tire 12 being mounted on the rim 14 at the tire mounting station 16. By way of example and not limitation, it is believed that a load sensor configuration according to the present invention can be used in order to determine whether a failure has occurred of the tire soaper and/or rim soaper mechanisms upstream of the tire mounting station 16.

Referring now to Figure 4, a simplified flow diagram is presented illustrating the setup procedure for the control means 34 of the robotic apparatus 10. For each tire and rim size combination to be assembled, a programmable predetermined path is stored in memory corresponding to the desired predetermined three dimensional path of movement of the robot arm supporting the bead mounting tool used to mount the particular tire 12 and rim 14 size combination being programmed. In addition, the orientation of the bead mounting tool 38 is programmed in three dimensions or in three degrees of freedom as previously described. In particular, the robotic path can be described with three degrees of freedom corresponding to the movements with respect to the first axis 44, the second axis 46, and the third axis 48, while the tool orientation can be described with respect to three degrees of freedom corresponding to the fourth axis 50, the fifth axis 52, and the sixth axis 54.

If desired for additional diagnostic capabilities, the present invention preferably includes programmable predetermined load limits or values along the particular path for the bead mounting tool 38. These load limits can be programmed for the particular three dimensional path and orientation of the bead mounting tool as a single predetermined value for all paths, or a specific load limit value that varies along the path for each particular tire and rim size combination if desired. The programmed path orientation and load limit for each tire and rim size combination to be assembled is stored in an appropriate memory location, which can include any type of memory storage device which is conventional and well known to those skilled in the art. By way of example and not limitation, memory can include random access memory, dynamic random access memory, magnetic storage means, optical storage means, digital and/or analog storage devices. The programming procedure is repeated during setup as many times as required to define the programmable path for each tire and rim size combination to be assembled.

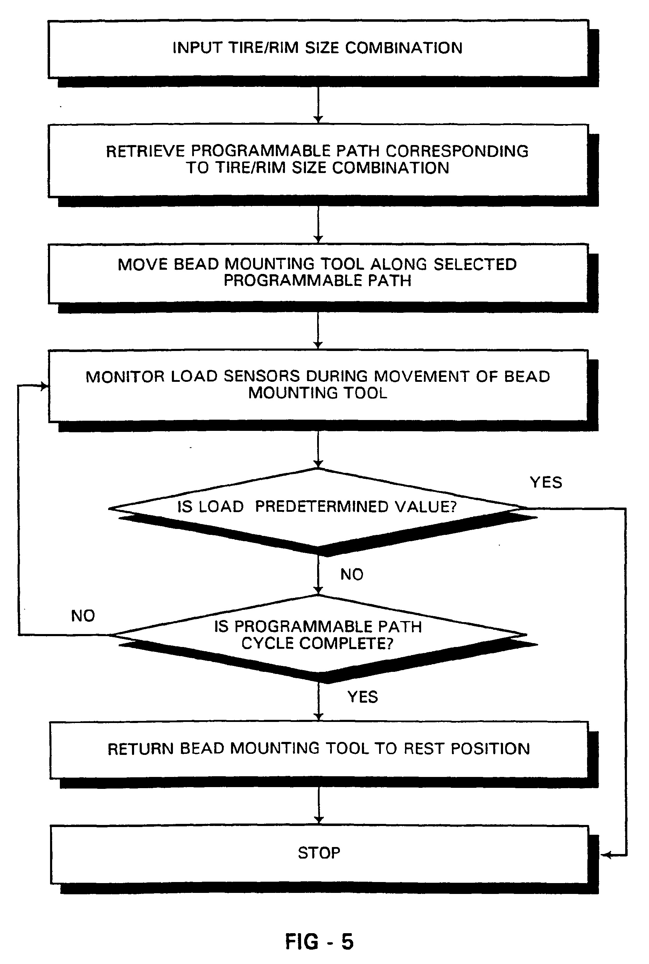

Referring now to Figure 5, the operation of the preferred configuration of the robotic apparatus 10 for mounting a tire 12 to a rim 14 is shown in a simplified schematic flow chart. As best seen in Figure 2, one or more tire/rim size combination sensor 64 is provided for generating a signal to be sent to the control means 34. The control means 34 receives the tire/rim size combination input signal, and in response to the signal retrieves a programmable predetermined path corresponding to the tire/rim size combination in accordance with the program stored in memory. The control means 34 then operates the robot 10 to move the bead mounting tool 38 along the selected programmable predetermined path and orientation. While the bead mounting tool 38 is moving along the selected programmable predetermined path and orientation, the control means 34 monitors the load sensors 62. The control means 34 determines if the load is greater than a programmable predetermined value. If the answer to that query is no, the program continues and the control means 34 determines if the programmable path cycle is complete. If the cycle is not complete, the programs returns to the step to continue monitoring the load sensor. If the sensed load is greater than a programmable predetermined value, the control means 34 immediately stops further movement of the bead mounting tool 38 by the robot 10 in order to prevent damage to the tire 12 being mounted on the rim 14 at the tire mounting station 16. When the programmable path cycle is complete, the control means 34 moves the robot 10 in order to return the bead mounting tool 38 to a rest position, such as that illustrated in Figure 2 positioned away from the tire mounting station 16, so that the mounted tire and rim can be moved along the conveyor and a new tire and rim combination can be positioned at the tire mounting station 16 for actuation of another cycle for mounting the tire 12 to the rim 14.

In the preferred programmable cycle of the present invention, the bead mounting tool 38 engages the tire 12 adjacent the tire-engaging clamp 24 and follows the programmable path around the rim 14 in order to spread the first bead 26 over the rim 14 of the wheel 20. After passing through approximately 360° with respect to the rim, the bead mounting tool 38 is in the position as shown in Figure 1. The second bead 28 is then spread in order to engage the bead 28 over the rim 14 as the bead mounting tool 38 is moved along a second portion of the programmable predetermined path, generally corresponding to a second movement around the entire periphery of the rim 14 in order to position the bead 28 with respect to the rim 14. By way of example and not limitation, the second portion of the programmable predetermined path of movement can correspond to a reverse movement of the bead mounting tool 38 from the path taken during the first portion of the cycle. The robot 10 can drive the bead mounting tool 38 in the opposite rotational movement from that taken during the first portion of the programmable predetermined path of movement used to mount the first bead 26 over the rim 14. After completion of the second portion of the programmable predetermined path of movement around the periphery of the rim by the bead mounting tool 38, the tire 12 is mounted with respect to the rim 14 with the beads 26, 28 in the appropriate position with respect to seats 30, 32 for inflating the tire at an inflation station downstream from the tire mounting station 16.

While the invention has been described in connection with what is presently considered to be the most practical and preferred embodiment, it is to be understood that the invention is not to be limited to the disclosed embodiments but, on the contrary, is intended to cover various modifications and equivalent arrangements included within the spirit and scope of the appended claims, which scope is to be accorded the broadest interpretation so as to encompass all such modifications and equivalent structures as is permitted under the law.

## Claims

1. A tire mounting apparatus for mounting a flexible tire (12) on a rim (14), comprising a bead-mounting tool (38) having a rim engaging portion (56) and a tire engaging portion (60) for forcing the bead (26, 28) of the tire (12) over the rim (14), **characterized by**
a robot (10) for controlled programmable movement, the robot (10) having an arm with a wrist (42) at one end, said bead-mounting tool (38) being connectible to the wrist (42), wherein said forcing the bad (26, 28) of the tire (12) over the rim (14) is performed in response to controlled programmable movement of the robot (10) with respect to the rim (14) and tire (12).

2. The apparatus of claim 1, further comprising:
the robot (10), having at least one articulated joint (40), the robot (10) moveable with at least three degrees of freedom along a selectable one of a plurality of programmable predetermined paths;
a central processing unit (38) for selectively executing any one of the plurality of programmable predetermined paths storable in memory;
the bead mounting tool (38) attachable to the wrist (42) of the robot (10) for movement along the selected one of the plurality of programmable predetermined paths of the robot (10), the tool (38) orientatable with at least three degrees of freedom independent of the selected one of the plurality of programmable predetermined paths;
a workpiece support (18) for positioning the rim (14) in a predetermined location with respect to the robot (10) and for positioning the tire (12) in a predetermined orientation with respect to the rim (14); and
a means (36) for generating a signal to the robot (10) corresponding to a size of the rim (14) and tire (12), wherein the central processing unit (34) selects one of the plurality of programmable predetermined paths corresponding to the rim and tire size.

3. The apparatus of claim 2 further comprising:
the robot (10) including at least one sensor (62) for measuring load on the joint (40) and wrist (42) during a tire mounting cycle; and
the program including a sensor monitoring function for stopping movement of the bead mounting tool (38) in response to a load greater than a predetermined value.

4. The apparatus of claim 2 further comprising:
a clamp member (24) for preventing rotation of the tire (12) with respect to the rim (14) as the bead mounting tool (38) works a bead (26, 28) of the tire (12) over the rim (14).

5. The apparatus of claim 2 further comprising:
the bead mounting tool moveable around an entire periphery of the rim (14) along a first predetermined path to seat a first bead (26) of the tire (12) on the rim (14) and moveable around the entire periphery of the rim (14) along a second predetermined path to seat a second bead (28) of the tire (12) on the rim (14).

6. The apparatus of claim 5 further comprising:
the first predetermined path moving the bead mounting tool (38) in a first rotational direction around the periphery of the rim (14) and
the second predetermined path moving the bead mounting tool (38) in a second rotational direction in an opposite rotational direction from the first predetermined path.

7. The apparatus of claim 1, further comprising:
means for moving with at least three degrees of freedom along a selectable one of a plurality of programmable predetermined paths, the moving means including a robot (10) having at least one articulated joint (40) and a wrist (42);
means for selectively executing any one of the plurality of programmable predetermined paths storable in memory with a central processing unit (34);
means for orientating a bead mounting tool (38) attachable to the wrist (42) of the robot (10) for movement along the selected one of the plurality of programmable predetermined paths of the robot (10) with at least three degrees of freedom independent of the selected one of the plurality of programmable predetermined paths; means for positioning the rim (14) in a predetermined location with respect to the robot (10) and for positioning the tire (12) in a predetermined orientation with respect to the rim (14) on a workpiece support (18); and
means (36) for generating a signal to the robot (10) corresponding to a size of the rim (14) and tire (12), wherein the central processing unit (34) selects one of the plurality of programmable predetermined paths corresponding to the rim
and tire size.

8. The apparatus of claim 7 further comprising:
means for measuring a load on the joint (40) and wrist (42) of the robot (10) with at least one sensor (62) during a tire mounting cycle; and
means for monitoring the at least one sensor (62) during the tire mounting cycle to stop movement of the bead mounting tool (38) in response to a sensed load greater than a predetermined value.

9. The apparatus of claim 7 further comprising:
means for preventing rotation of the tire (12) with respect to the rim (14) with a tire-engaging clamp (24), as the bead mounting tool (38) works a bead (26, 28) of the tire (12) over the rim (14).

10. The apparatus of claim 7 further comprising:
the moving means moving the bead mounting tool (38) around an entire periphery of the rim (14) along a first predetermined path to seat a first bead (26) of the tire (12) on the rim (14); and
the moving means moving the bead mounting tool (38) around the entire periphery of the rim (14) along a second predetermined path to seat a second bead (28) of the tire (12) on the rim (14).

11. The apparatus of claim 10 further comprising:
the moving means moving the bead mounting tool (38) in a first rotational direction around the entire periphery of the rim (14) along the first predetermined path; and
the moving means moving the bead mounting tool (38) in a second rotational direction along the second predetermined path in an opposite rotational direction from the first predetermined path.

12. The apparatus of claim 1, further comprising:
the robot (10) having at least one articulated joint (40), the robot (10) moveable along a selectable one of a plurality of programmable predetermined paths;
a central processing unit (34) for selectively executing any one of the plurality of programmable predetermined paths storable in memory;
the bead mounting tool (38) attachable to the wrist (42) of the robot (10) for movement along the selected one of the plurality of programmable predetermined paths of the robot (10), the tool (28) orientatable independent of the selected one of the plurality of programmable predetermined paths;
a workpiece support (18) for positioning the rim (14) in a predetermined location with respect to the robot (10) and for positioning the tire (12) in a predetermined orientation with respect to the rim (14); and
means (36) for generating a signal to the robot (10) corresponding to a size of the rim (14) and tire (12), wherein the central processing unit (34) selects one of the plurality of programmable predetermined paths corresponding to the rim and tire size.

13. The apparatus of claim 12 further comprising:
the robot (10) including at least one sensor (62) for measuring load on the joint (40) and wrist (42) during a tire mounting cycle; and
the program including a sensor monitoring function for stopping movement of the bead mounting tool (38) in response to a load greater than a predetermined value.

14. The apparatus of claim 12 further comprising:
a clamp member (24) for preventing rotation of the tire (12) with respect to the rim (14) as the bead mounting tool (38) works a bead (26, 28) of the tire (12) over the rim (14).

15. The apparatus of claim 12 further comprising:
the bead mounting tool (38) moveable around an entire periphery of the rim (14) along a first predetermined path to seat a first bead (26) of the tire (12) on the rim (14) and moveable around the entire periphery of the rim (14) along a second predetermined path to seat a second bead (28) of the tire (12) on the rim (14).

16. The apparatus of claim 15 further comprising:
the first predetermined path moving the bead mounting tool (38) in a first rotational direction around the periphery of the rim (14) and the second predetermined path moving the bead mounting tool (38) in a second rotational direction in an opposite rotational direction from the first predetermined path.

17. The apparatus of claim 1 further comprising:
the tool (38) being rotatable by the wrist (42) about a longitudinal axis (54) of the tool (38), as the tool (38) is carried by the robot (10) while mounting the tire (12) to the rim (14).

18. The apparatus of claim 1 further comprising:
the bead mounting tool (38) moveable along a plurality of predetermined paths;
means (36) for generating an electrical signal corresponding to a size of the rim (14) and tire (12); and
means (34) for selectively controlling movement of the tool (38) along one of the plurality of predetermined paths corresponding to the size of the rim (14) and tire (12) in response to the electrical signal.

19. The apparatus of claim 18 further comprising:
a tool mount (42) moveable along the selectable one of the plurality of predetermined paths; and
the tool (38) attachable to the tool mount (42), the tool (38) orientatable independent of the selected one of the plurality of predetermined paths for the tool mount (42).

20. The apparatus of claim 18 further comprising:
a workpiece support (18) for positioning the rim (14) in a predetermined location with respect to the tool (38) and for positioning the tire (12) in a predetermined orientation with respect to the rim (14).

21. The apparatus of claim 1, further comprising:
the bead-mounting (38) tool having a rim engaging portion (56) and a tire engaging portion (60) for forcing the bead (26, 28) of the tire (12) over the rim (14) in response to controlled movement of the tool (38) with respect to the rim (14) and tire (12), the tool (38) moveable along a plurality of predetermined paths corresponding to a size of the rim (14) and tire (12) to be mounted; and
means (34) for electrically controlling movement of the tool (38) and for electrically selecting one of the plurality of predetermined paths in response to the size of the rim (14) and tire (12) to be mounted.

22. The apparatus of claim 21 further comprising:
a tool mount (42) for controlled movement along one of a plurality of predetermined paths; and
the tool (38) attachable to the tool mount (42), the tool (38) orientatable independent of the selected one of the plurality of predetermined paths for the tool mount (42).

23. The apparatus of claim 22 further comprising:
means for controlling movement of the tool mount (42) and for selecting one of the plurality of predetermined paths in response to a size of the rim (14) and tire (12) to be mounted.

24. A method for mounting a flexible tire on a rim, **characterized by** the steps of:
orientating a bead mounting tool (38) moveable along a plurality of predetermined paths; generating an electrical signal corresponding to a size of the rim (14) and tire (12); and
selectively controlling movement of the tool (38) along one of the plurality of programmable predetermined paths corresponding to the rim and tire size in response to the electrical signal.

25. The method of claim 24 further comprising the steps of:
moving a tool mount (42) along the selectable one of the plurality of predetermined paths; and
orientating the tool (38) independent of the selected one of the plurality of predetermined paths for the tool mount (42), the tool (38) attachable to the tool mount (42).

26. The method of claim 24 further comprising the step of:
positioning the rim (14) in a predetermined location with respect to the tool (38) and positioning the tire (12) in a predetermined orientation with respect to the rim (14) on a workpiece support (18).

27. The method of claim 24, further comprising the steps of:
moving a robot (10) having at least one articulated joint (40) and a wrist (42) with at least three degrees of freedom along a selectable one of a plurality of programmable predetermined paths;
selectively executing any one of the plurality of programmable predetermined paths storable in memory with a central processing unit (34);
orientating the bead mounting tool (38) attachable to the wrist (42) of the robot (10) for movement along the selected one of the plurality of programmable predetermined paths of the robot (10) with at least three degrees of freedom independent of the selected one of the plurality of programmable predetermined paths;
positioning the rim (14) in a predetermined location with respect to the robot (10) an a positioning the tire (12) in a predetermined orientation with respect to the rim (14) on a workpiece support (18); and
generating a signal to the robot (10) corresponding to a size of the rim (14) and tire (12), wherein the central processing unit (34) selects one of the plurality of programmable predetermined paths corresponding to the rim and tire size.

28. The method of claim 27 further comprising the steps of:
measuring a load on the joint (40) and wrist (42) of the robot (10) with at least one sensor (62) during a tire mounting cycle; and
monitoring the at least one sensor (62) during the tire mounting cycle to stop movement of the bead mounting tool (38) in response to a sensed load greater than a predetermined value.

29. The method of claim 27 further comprising the step of:
preventing rotation of the tire (12) with respect to the rim (14) with a tire-engaging clamp (24), as the bead mounting tool (38) works a bead (26, 28) of the tire (12) over the rim (14).

30. The method of claim 27 further comprising the steps of:
moving the bead mounting tool (38) around an entire periphery of the rim (14) along a first predetermined path to seat a first bead (26) of the tire (12) on the rim (14); and
moving the bead mounting tool (38) around the entire periphery of the rim (14) along a second predetermined path to seat a second bead (28) of the tire (12) on the rim (14).

31. The method of claim 30 further comprising the steps of:
moving the bead mounting tool (38) in a first rotational direction around the entire periphery of the rim (14) along the first predetermined path; and
moving the bead mounting tool (38) in a second rotational direction along the second predetermined path in an opposite rotational direction from the first predetermined path.

32. The method of claim 24, further comprising the steps of:
moving a robot (10) having at least one articulated joint (40) and a wrist (42) along a selectable one of a plurality of programmable predetermined paths;
selectively executing any one of the plurality of programmable predetermined paths storable in memory with a central processing unit (34); orientating a bead mounting tool (38) attachable to the wrist (42) of the robot (10) for movement along the selected one of the plurality of programmable predetermined paths of the robot (10) independent of the selected one of the plurality of programmable predetermined paths;
positioning the rim (14) in a predetermined location with respect to the robot (10) and positioning the tire (12) in a predetermined orientation with respect to the rim (14) on a workpiece support (18); and
generating a signal to the robot (10) corresponding to a size of the rim (14) and tire (12), wherein the central processing unit (34) selects one of the plurality of programmable predetermined paths corresponding to the rim and tire size.

33. The method of claim 32 further comprising the steps of:
measuring a load on the joint (40) and wrist (42) of the robot (10) with at least one sensor (62) during a tire mounting cycle; and
monitoring the at least one sensor (62) during the tire mounting cycle to stop movement of the bead mounting tool (38) in response to a sensed load greater than a predetermined value.

34. The method of claim 32 further comprising the step of:
preventing rotation of the tire (12) with respect to the rim (14) with a tire-engaging clamp (24), as the bead mounting tool (38) works a bead (26, 28) of the tire (12) over the rim (14) .

35. The method of claim 32 further comprising the steps of:
moving the bead mounting tool (38) around an entire periphery of the rim (14) along a first predetermined path to seat a first bead (26) of the tire (12) an the rim (14); and
moving the bead mounting tool (38) around the entire periphery of the rim (14) along a second predetermined path to seat a second bead (28) of the tire (12) on the rim (14).

36. The method of claim 35 further comprising the steps of:
moving the bead mounting tool (38) in a first rotational direction around the entire periphery of the rim (14) along the first predetermined path; and
moving the bead mounting tool (38) in a second rotational direction along the second predetermined path in an opposite rotational direction from the first predetermined path.

## Patentansprüche

1. Reifenmontagevorrichtung zum Montieren eines flexiblen Reifens (12) auf eine Felge (14), aufweisend ein einen Wulst montierendes Werkzeug (38) mit einem Felgeneingriffsbereich (56) und einem Reifeneingriffsbereich (60), um den Wulst (26, 28) des Reifens (12) über die Felge (14) zu drücken, **gekennzeichnet durch**
einen Roboter (10) für gesteuerte programmierbare Bewegung, welcher Roboter (10) einen Arm mit einem Gelenk (42) an einem Ende hat, wobei das den Wulst montierende Werkzeug (38) mit dem Gelenk (42) verbindbar ist und das Drücken des Wulstes (26, 28) des Reifens (12) über die Felge (14) durchgeführt wird in Abhängigkeit von einer gesteuerten programmierbaren Bewegung des Roboters (10) mit Bezug auf die Felge (14) und den Reifen (12).

2. Vorrichtung nach Anspruch 1, welche weiterhin aufweist:
den Roboter (10) mit zumindest einer Gelenkverbindung (40), wobei der Roboter (10) mit zumindest drei Freiheitsgraden entlang eines auswählbaren von mehreren programmierbaren vorbestimmten Pfaden bewegbar ist;
eine zentrale Verarbeitungseinheit (38) zum selektiven Ausführen irgendeines der mehreren programmierbaren vorbestimmten Pfade, die im Speicher speicherbar sind;
das den Wulst montierende Werkzeug (38) an dem Gelenk (42) des Roboters (10) anbringbar ist für eine Bewegung entlang des ausgewählten der mehreren programmierbaren vorbestimmbaren Pfade des Roboters (10), das Werkzeug (38) mit zumindest drei Freiheitsgraden unabhängig von dem ausgewählten der mehreren programmierbaren vorbestimmten Pfade orientierbar ist;
eine Werkstückstütze (18) zum Positionieren der Felge (14) in einer vorbestimmten Lage mit Bezug auf den Roboter (10) und zum Positionieren des Reifens (12) in einer vorbestimmten Orientierung mit Bezug auf die Felge (14); und
eine Vorrichtung (36) zum Erzeugen eines Signals für den Roboter (10) entsprechend einer Größe der Felge (14) und des Reifens (12), wobei die zentrale Verarbeitungseinheit (34) einen der mehreren programmierbaren vorbestimmten Pfade entsprechend der Größe der Felge und des Reifens auswählt.

3. Vorrichtung nach Anspruch 2, welche weiterhin aufweist:
den Roboter (10) enthaltend zumindest einen Sensor (62) zum Messen der Last auf die Verbindung (40) und das Gelenk (42) während eines Reifenmontagezyklus; und das Programm enthaltend eine Sensorüberwachungsfunktion zum Anhalten der Bewegung des den Wulst montierenden Werkzeugs (38) in Abhängigkeit von einer Last, die größer als ein vorbestimmter Wert ist.

4. Vorrichtung nach Anspruch 2, weiterhin aufweisend:
ein Klemmglied (24) zum Verhindern der Drehung des Reifens (12) mit Bezug auf die Felge (14), wenn das den Wulst montierende Werkzeug (38) einen Wulst (26, 28) des Reifens (12) über die Felge (14) drückt.

5. Vorrichtung nach Anspruch 2, weiterhin aufweisend:
das den Wulst montierende Werkzeug ist um einen gesamten Umfang der Felge (14) entlang eines ersten vorbestimmten Pfades bewegbar, um einen ersten Wulst (26) des Reifens (12) auf der Felge 14) anzuordnen, und um den gesamten Umfang der Felge (14) entlang eines zweiten vorbestimmten Pfads bewegbar, um einen zweiten Wulst (28) des Reifens (12) auf der Felge (14) anzuordnen.

6. Vorrichtung nach Anspruch 5, weiterhin aufweisend:
der erste vorbestimmte Pfad bewegt das den Wulst montierende Werkzeug (38) in einer ersten Drehrichtung um den Umfang der Felge (14) und der zweite vorbestimmte Pfad bewegt das den Wulst montierende Werkzeug (38) in einer zweiten Drehrichtung in einer gegenüber dem ersten vorbestimmten Pfad entgegengesetzten Drehrichtung.

7. Vorrichtung nach Anspruch 1, weiterhin aufweisend:
eine Vorrichtung zum Bewegen mit zumindest drei Freiheitsgraden entlang eines auswählbaren von mehreren programmierbaren vorbestimmten Pfaden, welche Bewegungsrichtung einen Roboter (10) mit zumindest einer Gelenkverbindung (40) und einem Gelenk (42) enthält;
eine Vorrichtung zum selektiven Ausführen von irgendeinem der mehreren programmierbaren vorbestimmten Pfade, die in einem Speicher der zentralen Verarbeitungseinheit (34) speicherbar sind;
eine Vorrichtung zum Orientieren eines einen Wulst montierenden Werkzeugs (38), das an dem Gelenk (42) des Roboters (10) anbringbar ist, für eine Bewegung entlang des ausgewählten der mehreren programmierbaren vorbestimmten Pfade des Roboters (10) mit zumindest drei Freiheitsgraden unabhängig von dem ausgewählten der mehreren programmierbaren vorbestimmten Pfade;
eine Vorrichtung zum Positionieren der Felge (14) in einer vorbestimmten Lage mit Bezug auf den Roboter (10) und zum Positionieren des Reifens (12) in einer vorbestimmten Orientierung mit Bezug auf die Felge (14) auf einer Werkstückstütze (18); und
eine Vorrichtung (36) zum Erzeugen eines Signals für den Roboter (10) entsprechend einer Größe der Felge (14) und des Reifens (12), wobei die zentrale Verarbeitungseinheit (34) einen der mehreren programmierbaren vorbestimmten Pfade entsprechend der Größe der Felge und des Reifens auswählt.

8. Vorrichtung nach Anspruch 7, weiterhin aufweisend:
Mittel zum Messen einer Last auf die Verbindung (40) und das Gelenk (42) des Roboters (10) mit zumindest einem Sensor (62) während eines Reifenmontagezyklus; und
Mittel zum Überwachen des zumindest einen Sensors (62) während des Reifenmontagezyklus, um die Bewegung des Wulstmontagewerkzeugs (38) als Antwort auf eine erfasste Last, die größer als ein vorbestimmter Wert ist, anzuhalten.

9. Vorrichtung nach Anspruch 7, welche weiterhin aufweist:
Mittel zum Verhindern der Drehung des Reifens (12) mit Bezug auf die Felge (14) durch eine Reifeneingriffsklemme (24), wenn das Wulstmontagewerkzeug (38) einen Wulst (26, 28) des Reifens (12) über die Felge (14) drückt.

10. Vorrichtung nach Anspruch 7, welche weiterhin aufweist:
die Bewegungsmittel bewegen das Wulstmontagewerkzeug (38) um den gesamten Umfang der Felge (14) entlang eines ersten vorbestimmten Pfads, um einen ersten Wulst (26) des Reifens (12) auf der Felge (14) anzuordnen; und
die Bewegungsmittel bewegen das Wulstmontagewerkzeug (38) um den gesamten Umfang der Felge (14) entlang eines zweiten vorbestimmten Pfads, um einen zweiten Wulst (28) des Reifens (12) auf der Felge (14) anzuordnen.

11. Vorrichtung nach Anspruch 10, welche weiterhin aufweist:
die Bewegungsmittel bewegen das Wulstmontagewerkzeug (38) in einer ersten Drehrichtung um den gesamten Umfang der Felge (14) herum entlang des ersten vorbestimmten Pfads; und
die Bewegungsmittel bewegen das Wulstmontagewerkzeug (38) in einer zweiten Drehrichtung entlang des zweiten vorbestimmten Pfads in einer gegenüber dem ersten vorbestimmten Pfad entgegengesetzten Drehrichtung.

12. Vorrichtung nach Anspruch 1, welche weiterhin aufweist:
der Roboter (10) hat zumindest eine Gelenkverbindung (40), der Roboter (10) ist entlang eines auswählbaren von mehreren programmierbaren vorbestimmten Pfaden bewegbar;
eine Zentralverarbeitungseinheit (34) zum selektiven Ausführen von einem der mehreren programmierbaren vorbestimmten Pfade, die in einem Speicher speicherbar sind;
das Wulstmontagewerkzeug (38) ist an dem Gelenk (42) des Roboters (10) anbringbar für eine Bewegung entlang des ausgewählten der mehreren programmierbaren vorbestimmten Pfade des Roboters (10), das Werkzeug (28) ist unabhängig von dem ausgewählten der mehreren programmierbaren vorbestimmten Pfade orientierbar;
eine Werkstückstütze (18) zum Positionieren der Felge (14) in einer vorbestimmten Lage mit Bezug auf den Roboter (10) und zum Positionieren des Reifens (12) in einer vorbestimmten Orientierung mit Bezug auf die Felge (14); und
Mittel (36) zum Erzeugen eines Signals für den Roboter (10) entsprechend einer Größe der Felge (14) und des Reifens (12), wobei die Zentralverarbeitungseinheit (34) einen der mehreren programmierbaren vorbestimmten Pfade entsprechend der Größe der Felge und des Reifens auswählt.

13. Vorrichtung nach Anspruch 12, welche weiterhin aufweist:
den Roboter (10) enthaltend zumindest einen Sensor (62) zum Messen der Last auf die Verbindung (40) und das Gelenk (42) während eines Reifenmontagezyklus; und
das Programm enthaltend eine Sensorüberwachungsfunktion zum Anhalten der Bewegung des Wulstmontagewerkzeugs (38) als Antwort auf eine Last, die größer als ein vorbestimmter Wert ist.

14. Vorrichtung nach Anspruch 12, welche weiterhin aufweist:
ein Klemmglied (24) zum Verhindern einer Drehung des Reifens (12) mit Bezug auf die Felge (14), wenn das Wulstmontagewerkzeug (38) einen Wulst (26, 28) des Reifens (12) über die Felge (14) drückt.

15. Vorrichtung nach Anspruch 12, welche weiterhin aufweist:
das Wulstmontagewerkzeug (38) bewegbar um einen ganzen Umfang der Felge (14) entlang eines ersten vorbestimmten Pfads, um einen ersten Wulst (26) des Reifens (12) auf der Felge (14) anzuordnen, und bewegbar um den gesamten Umfang der Felge (14) herum entlang eines zweiten vorbestimmten Pfads, um einen zweiten Wulst (18) des Reifens (12) auf der Felge (14) anzuordnen.

16. Vorrichtung nach Anspruch 15, welche weiterhin aufweist:
den ersten vorbestimmten Pfad bewegend das Wulstmontagewerkzeug (38) in einer ersten Drehrichtung um den Umfang der Felge (14) herum und
den zweiten vorbestimmten Pfad bewegend das Wulstmontagewerkzeug (38) in einer zweiten Drehrichtung in einer gegenüber dem ersten vorbestimmten Pfad entgegengesetzten Drehrichtung.

17. Vorrichtung nach Anspruch 1, welche weiterhin aufweist:
das Werkzeug (38) bewegbar durch das Gelenk (42) um eine Längsachse (54) des Werkzeugs (38), wenn das Werkzeug (38) von dem Roboter (10) getragen wird, während der Reifen (12) auf der Felge (14) montiert wird.

18. Vorrichtung nach Anspruch 1, welche weiterhin aufweist:
das Wulstmontagewerkzeug (38) bewegbar entlang mehrerer vorbestimmter Pfade; Mittel (36) zum Erzeugen eines elektrischen Signals entsprechend einer Größe der Felge (14) und des Reifens (12); und
Mittel (34) zum selektiven Steuern der Bewegung des Werkzeugs (38) entlang einem der mehreren vorbestimmten Pfade entsprechend der Größe der Felge (14) und des Reifens (12) als Antwort auf das elektrische Signal.

19. Vorrichtung nach Anspruch 18, welche weiterhin aufweist:
eine Werkzeughalterung (42), die entlang des einen auswählbaren der mehreren vorbestimmten Pfade bewegbar ist; und
das Werkzeug (38) an der Werkzeughalterung (42) anbringbar ist, wobei das Werkzeug (38) unabhängig von dem einen ausgewählten der mehreren vorbestimmten Pfade für die Werkzeughalterung (42) orientierbar ist.

20. Vorrichtung nach Anspruch 18, welche weiterhin aufweist:
eine Werkstückstütze (18) zum Positionieren der Felge (14) in einer vorbestimmten Lage mit Bezug auf das Werkzeug (38) und zum Positionieren des Reifens (12) in einer vorbestimmten Orientierung mit Bezug auf die Felge (14).

21. Vorrichtung nach Anspruch 1, welche weiterhin aufweist:
das Wulstmontagewerkzeug (38) mit einem Felgeneingriffsbereich (56) und einem Reifeneingriffsbereich (60) zum Drücken des Wulstes (26, 28) des Reifens (12) über die Felge (14) als Antwort auf eine gesteuerte Bewegung des Werkzeugs (38) mit Bezug auf die Felge (14) und den Reifen (12), wobei das Werkzeug (38) entlang mehrerer vorbestimmter Pfade entsprechend einer Größe der Felge (14) und des zu montierenden Reifens (12) bewegbar ist; und
Mittel (34) zum elektrischen Steuern der Bewegung des Werkzeugs (38) und zum elektrischen Auswählen eines der mehreren vorbestimmten Pfade als Antwort auf die Größe der Felge (14) und des zu montierenden Reifens (12).

22. Vorrichtung nach Anspruch 21, welche weiterhin aufweist:
eine Werkzeughalterung (42) für gesteuerte Bewegung entlang eines von mehreren vorbestimmten Pfaden; und
das Werkzeug (38) anbringbar an der Werkzeughalterung (42), wobei das Werkzeug (38) unabhängig von dem ausgewählten der mehreren vorbestimmten Pfade für die Werkzeughalterung (42) orientierbar ist.

23. Vorrichtung nach Anspruch 22, weiterhin aufweisend:
Mittel zur gesteuerten Bewegung der Werkzeughalterung (42) und zur Auswahl eines der mehreren vorbestimmten Pfade als Antwort auf eine Größe der Felge (14) und des zu montierenden Reifens (12) .

24. Verfahren zum Montieren eines flexiblen Reifens auf eine Felge, **gekennzeichnet durch** die Schritte:
Orientieren eines Wulstmontagewerkzeugs (38), das entlang mehrerer vorbestimmter Pfade bewegbar ist;
Erzeugen eines elektrischen Signals entsprechend einer Größe der Felge (14) und des Reifens (12); und
selektives Steuern der Bewegung des Werkzeugs (38) entlang eines der mehreren programmierbaren vorbestimmten Pfade entsprechend der Größe der Felge und des Reifens als Antwort auf das elektrische Signal.

25. Verfahren nach Anspruch 24, weiterhin aufweisend die Schritte:
Bewegen einer Werkzeughalterung (42) entlang des auswählbaren der mehreren vorbestimmten Pfade; und
Orientieren des Werkzeugs (38) unabhängig von dem ausgewählten der mehreren vorbestimmten Pfade für die Werkzeughalterung (42), wobei das Werkzeug (38) an der Werkzeughalterung (42) anbringbar ist.

26. Verfahren nach Anspruch 24, weiterhin aufweisend den Schritt:
Positionieren der Felge (14) in einer vorbestimmten Lage mit Bezug auf das Werkzeug (38), und Positionieren des Reifens (12) in einer vorbestimmten Orientierung mit Bezug auf die Felge (14) auf einer Werkstückstütze (18).

27. Verfahren nach Anspruch 24, weiterhin aufweisend die Schritte:
Bewegen eines Roboters (10) mit zumindest einer Gelenkverbindung (40) und einem Gelenk (42) mit zumindest drei Freiheitsgraden entlang eines ausgewählten von mehreren programmierbaren vorbestimmten Pfaden;
selektives Ausführen eines der mehreren programmierbaren vorbestimmten Pfade, die in einem Speicher einer Zentralverarbeitungseinheit (34) speicherbar sind;
Orientieren des Wulstmontagewerkzeugs (38), das an dem Gelenk (42) des Roboters (10) anbringbar ist, für eine Bewegung entlang des ausgewählten der mehreren programmierbaren vorbestimmten Pfade des Roboters (10) mit zumindest drei Freiheitsgraden unabhängig von dem ausgewählten der mehreren programmierbaren vorbestimmten Pfade;
Positionieren der Felge (14) in einer vorbestimmten Lage mit Bezug auf den Roboter (10) und Positionieren des Reifens (12) in einer vorbestimmten Orientierung mit Bezug auf die Felge (14) auf einer Werkstückstütze (18); und
Erzeugen eines Signals für den Roboter (10) entsprechend einer Größe der Felge (14) und des Reifens (12), wobei die Zentralverarbeitungseinheit (34) einen der mehreren programmierbaren vorbestimmten Pfade entsprechend der Größe der Felge und des Reifens auswählt.

28. Verfahren nach Anspruch 27, weiterhin aufweisend die Schritte:
Messen einer Last auf die Verbindung (40) und das Gelenk (42) des Roboters (10) mit zumindest einem Sensor (62) während eines Reifenmontagezyklus; und
Überwachen des zumindest einen Sensors (62) während des Reifenmontagezyklus, um die Bewegung des Wulstmontagewerkzeugs (38) als Antwort auf eine erfasste Last, die größer als ein vorbestimmter Wert ist, anzuhalten.

29. Verfahren nach Anspruch 27, weiterhin aufweisend den Schritt:
Verhindern einer Drehung des Reifens (12) mit Bezug auf die Felge (14) mit einer Reifeneingriffsklemme (24), wenn das Wulstmontagewerkzeug (38) einen Wulst (26, 28) des Reifens (12) über die Felge (14) drückt.

30. Verfahren nach Anspruch 27, weiterhin aufweisend die Schritte:
Bewegen des Wulstmontagewerkzeugs (38) um den gesamten Umfang der Felge (14) herum entlang eines ersten vorbestimmen Pfads, um einen ersten Wulst (26) des Reifens (12) auf der Felge (14) anzuordnen; und
Bewegen des Wulstmontagewerkzeugs (38) um den gesamten Umfang der Felge (14) herum entlang eines zweiten vorbestimmten Pfads, um einen zweiten Wulst (28) des Reifens (12) auf der Felge (14) anzuordnen.

31. Verfahren nach Anspruch 30, weiterhin aufweisend die Schritte:
Bewegen des Wulstmontagewerkzeugs (38) in einer ersten Drehrichtung um den gesamten Umfang der Felge (14) herum entlang des ersten vorbestimmten Pfads; und
Bewegen des Wulstmontagewerkzeugs (38) in einer zweiten Drehrichtung entlang des zweiten vorbestimmten Pfads in einer zu dem ersten vorbestimmten Pfad entgegengesetzten Drehrichtung.

32. Verfahren nach Anspruch 24, weiterhin aufweisend die Schritte:
Bewegen eines Roboters (10) mit zumindest einer Gelenkverbindung (40) und einem Gelenk (42) entlang eines auswählbaren von mehreren programmierbaren vorbestimmten Pfaden;
selektives Ausführen irgendeines der mehreren programmierbaren vorbestimmten Pfade, die in einem Speicher einer Zentralverarbeitungseinheit (34) speicherbar sind;
Orientieren eines Wulstmontagewerkzeugs (38), das an dem Gelenk (42) des Roboters (10) anbringbar ist, für eine Bewegung entlang des ausgewählten der mehreren programmierbaren vorbestimmten Pfade des Roboters (10) unabhängig von dem ausgewählten der mehreren programmierbaren vorbestimmten Pfade;
Positionieren der Felge (14) in einer vorbestimmten Lage mit Bezug auf den Roboter (10) und Positionieren des Reifens (12) in einer vorbestimmten Orientierung mit Bezug auf die Felge (14) auf einer Werkstückstütze (18); und
Erzeugen eines Signals für den Roboter (10) entsprechend einer Größe der Felge (14) und des Reifens (12), wobei die Zentralverarbeitungseinheit (34) einen der mehreren programmierbaren vorbestimmten Pfade entsprechend der Größe der Felge und des Reifens auswählt.

33. Verfahren nach Anspruch 32, weiterhin aufweisend die Schritte:
Messen einer Last auf die Verbindung (40) und das Gelenk (42) des Roboters (10) mit zumindest einem Sensor (62) während eines Reifenmontagezyklus; und
Überwachen des zumindest einen Sensors (62) während des Reifenmontagezyklus, um die Bewegung des Wulstmontagewerkzeugs (38) als Antwort auf eine erfasste Last, die größer als ein vorbestimmter Wert ist, anzuhalten.

34. Verfahren nach Anspruch 32, weiterhin aufweisend den Schritt:
Verhindern der Drehung des Reifens (12) mit Bezug auf die Felge (14) mit einer Reifeneingriffsklemme (24), wenn das Wulstmontagewerkzeug (38) einen Wulst (26, 28) des Reifens (12) über die Felge (14) drückt.

35. Verfahren nach Anspruch 32, weiterhin aufweisend die Schritte:
Bewegen des Wulstmontagewerkzeugs (38) um den gesamten Umfang der Felge (14) herum entlang eines ersten vorbestimmten Pfads, um einen ersten Wulst (26) des Reifens (12) auf der Felge (14) anzuordnen; und
Bewegen des Wulstmontagewerkzeugs (38) um die gesamte Peripherie der Felge (14) herum entlang eines zweiten vorbestimmen Pfads, um einen zweiten Wulst (28) des Reifens (12) auf der Felge (14) anzuordnen.

36. Verfahren nach Anspruch 35, weiterhin aufweisend die Schritte:
Bewegen des Wulstmontagewerkzeugs (38) in einer ersten Drehrichtung um den gesamten Umfang der Felge (14) herum entlang des ersten vorbestimmten Pfads; und
Bewegen des Wulstmontagewerkzeugs (38) in einer zweiten Drehrichtung entlang des zweiten vorbestimmten Pfads in einer zu dem ersten vorbestimmten Pfad entgegengesetzten Drehrichtung.

## Revendications

1. Appareil de montage de pneu destiné à monter un pneu flexible (12) sur une jante (14), comprenant un outil de montage de talon (38) possédant une partie d'engagement de jante (56) et une partie d'engagement de pneu (60) destinées à forcer le talon (26, 28) du pneu (12) sur la jante (14), **caractérisé par**
un robot (10) destiné à un mouvement programmable commandé, le robot (10) possédant un bras ayant un poignet (42) à une extrémité, ledit outil de montage de talon (38) pouvant être relié au poignet (42), dans lequel ledit forçage du talon (26, 28) du pneu (12) sur la jante (14) est effectué en réponse au mouvement programmable commandé du robot (10) par rapport à la jante (14) et au pneu (12).

2. Appareil selon la revendication 1, comprenant en outre :
le robot (10), possédant au moins un joint articulé (40), le robot (10) étant mobile avec au moins trois degrés de liberté le long de l'un sélectionnable d'une pluralité de trajets programmables prédéterminés ;
une unité centrale de traitement (38) destinée à exécuter sélectivement n'importe lequel de la pluralité de trajets programmables prédéterminés pouvant être stockés dans une mémoire ;
l'outil de montage de talon (38) pouvant être fixé au poignet (42) du robot (10) en vue d'un mouvement le long de l'un sélectionné de la pluralité de trajets programmables prédéterminés du robot (10), l'outil (38) étant orientable avec au moins trois degrés de liberté, indépendamment de celui sélectionné de la pluralité de trajets programmables prédéterminés ;
un support de pièce (18) destiné à positionner la jante (14) à un emplacement prédéterminé par rapport au robot (10) et à positionner le pneu (12) selon une orientation prédéterminée par rapport à la jante (14) ; et
un moyen (36) destiné à générer un signal pour le robot (10), correspondant à une taille de la jante (14) et du pneu (12), dans lequel l'unité centrale de traitement (34) sélectionne l'un de la pluralité de trajets programmables prédéterminés correspondant à la taille de la jante et du pneu.

3. Appareil selon la revendication 2, comprenant en outre :
le robot (10) comprenant au moins un capteur (62) destiné à mesurer une charge sur le joint (40) et le poignet (42) pendant un cycle de montage de pneu ; et le programme comprenant une fonction de surveillance du capteur destinée à arrêter le mouvement de l'outil de montage de talon (38) en réponse à une charge supérieure à une valeur prédéterminée.

4. Appareil selon la revendication 2, comprenant en outre :
un élément de pince (24) destiné à empêcher la rotation du pneu (12) par rapport à la jante (14) lorsque l'outil de montage de talon (38) usine un talon (26, 28) du pneu (12) sur la jante (14).

5. Appareil selon la revendication 2, comprenant en outre :
l'outil de montage de talon mobile autour d'une périphérie entière de la jante (14), le long d'un premier trajet prédéterminé, afin de placer un premier talon (26) du pneu (12) sur la jante (14), et mobile autour de la périphérie entière de la jante (14), le long d'un second trajet prédéterminé, afin de placer un second talon (28) du pneu (12) sur la jante (14).

6. Appareil selon la revendication 5, comprenant en outre :
le premier trajet prédéterminé déplaçant l'outil de montage de talon (38) dans une première direction de rotation autour de la périphérie de la jante (14), et le second trajet prédéterminé déplaçant l'outil de montage de talon (38) dans une seconde direction de rotation, dans une direction de rotation opposée par rapport au premier trajet prédéterminé.

7. Appareil selon la revendication 1, comprenant en outre :
un moyen pour se déplacer avec au moins trois degrés de liberté le long de l'un sélectionnable d'une pluralité de trajets programmables prédéterminés, le moyen de déplacement comprenant un robot (10) possédant au moins un joint articulé (40) et un poignet (42) ; un moyen pour exécuter sélectivement n'importe lequel de la pluralité de trajets programmables prédéterminés pouvant être stockés dans une mémoire avec une unité centrale de traitement (34) ;
un moyen pour orienter un outil de montage de talon (38) pouvant être fixé au poignet (42) du robot (10) en vue d'un mouvement le long de celui sélectionné de la pluralité de trajets programmables prédéterminés du robot (10), avec au moins trois degrés de liberté, indépendamment du trajet programmable prédéterminé sélectionné parmi ladite pluralité ; un moyen pour positionner la jante (14) à un emplacement prédéterminé par rapport au robot (10), et pour positionner le pneu (12) selon une orientation prédéterminée par rapport à la jante (14) sur un support de pièce (18) ; et
un moyen (36) pour générer un signal destiné au robot (10), correspondant à une taille de la jante (14) et du pneu (12), dans lequel l'unité centrale de traitement (34) sélectionne l'un de la pluralité de trajets programmables prédéterminés correspondant à la taille de la jante et du pneu.

8. Appareil selon la revendication 7, comprenant en outre :
un moyen pour mesurer une charge sur le joint (40) et le poignet (42) du robot (10), avec au moins un capteur (62), pendant un cycle de montage de pneu ; et un moyen pour surveiller le au moins un capteur (62) pendant le cycle de montage de pneu, afin d'arrêter le mouvement de l'outil de montage de talon (38) en réponse à une charge détectée supérieure à une valeur prédéterminée.

9. Appareil selon la revendication 7, comprenant en outre :
un moyen pour empêcher la rotation du pneu (12) par rapport à la jante (14) avec une pince d'engagement de pneu (24), lorsque l'outil de montage de talon (38) usine un talon (26, 28) du pneu (12) sur la jante (14).

10. Appareil selon la revendication 7, comprenant en outre :
le moyen de déplacement déplaçant l'outil de montage de talon (38) autour d'une périphérie entière de la jante (14), le long d'un premier trajet prédéterminé, afin de placer un premier talon (26) du pneu (12) sur la jante (14) ; et le moyen de déplacement déplaçant l'outil de montage de talon (38) autour de la périphérie entière de la jante (14), le long d'un second trajet prédéterminé, afin de placer un second talon (28) du pneu (12) sur la jante (14).

11. Appareil selon la revendication 10, comprenant en outre :
le moyen de déplacement déplaçant l'outil de montage de talon (38) dans une première direction de rotation autour de la périphérie entière de la jante (14), le long du premier trajet prédéterminé ; et
le moyen de déplacement déplaçant l'outil de montage de talon (38) dans une seconde direction de rotation, le long du second trajet prédéterminé, dans une direction de rotation opposée par rapport au premier trajet prédéterminé.

12. Appareil selon la revendication 1, comprenant en outre :
le robot (10) possédant au moins un joint articulé (40), le robot (10) étant mobile le long de l'un sélectionnable d'une pluralité de trajets programmables prédéterminés ;
une unité centrale de traitement (34) destinée à exécuter sélectivement n'importe lequel de la pluralité de trajets programmables prédéterminés pouvant être stockés dans une mémoire ;
l'outil de montage de talon (38) pouvant être fixé au poignet (42) du robot (10) en vue d'un mouvement le long du trajet programmable prédéterminé du robot (10) sélectionné parmi ladite pluralité, l'outil (28) étant orientable indépendamment du trajet programmable prédéterminé sélectionné parmi ladite pluralité ;
un support de pièce (18) destiné à positionner la jante (14) à un emplacement prédéterminé par rapport au robot (10) et à positionner le pneu (12) selon une orientation prédéterminée par rapport à la jante (14) ; et
un moyen (36) destiné à générer un signal pour le robot (10), correspondant à une taille de la jante (14) et du pneu (12), dans lequel l'unité centrale de traitement (34) sélectionne l'un de la pluralité de trajets programmables prédéterminés correspondant à la taille de la jante et du pneu.

13. Appareil selon la revendication 12, comprenant en outre :
le robot (10) comprenant au moins un capteur (62) destiné à mesurer une charge sur le joint (40) et le poignet (42) pendant un cycle de montage de pneu ; et le programme comprenant une fonction de surveillance du capteur destinée à arrêter le mouvement de l'outil de montage de talon (38) en réponse à une charge supérieure à une valeur prédéterminée.

14. Appareil selon la revendication 12, comprenant en outre :
un élément de pince (24) destiné à empêcher la rotation du pneu (12) par rapport à la jante (14) lorsque l'outil de montage de talon (38) usine un talon (26, 28) du pneu (12) sur la jante (14).

15. Appareil selon la revendication 12, comprenant en outre :
l'outil de montage de talon (38) mobile autour d'une périphérie entière de la jante (14), le long d'un premier trajet prédéterminé, afin de placer un premier talon (26) du pneu (12) sur la jante (14), et mobile autour de la périphérie entière de la jante (14), le long d'un second trajet prédéterminé, afin de placer un second talon (28) du pneu (12) sur la jante (14).

16. Appareil selon la revendication 15, comprenant en outre :
le premier trajet prédéterminé déplaçant l'outil de montage de talon (38) dans une première direction de rotation autour de la périphérie de la jante (14), et le second trajet prédéterminé déplaçant l'outil de montage de talon (38) dans une seconde direction de rotation, dans une direction de rotation opposée par rapport au premier trajet prédéterminé.

17. Appareil selon la revendication 1, comprenant en outre :
l'outil (38) pouvant être tourné par le poignet (42) autour d'un axe longitudinal (54) de l'outil (38), lorsque l'outil (38) est porté par le robot (10), tout en montant le pneu (12) sur la jante (14).

18. Appareil selon la revendication 1, comprenant en outre :
l'outil de montage de talon (38) mobile le long d'une pluralité de trajets prédéterminés ;
un moyen (36) destiné à générer un signal électrique correspondant à une taille de la jante (14) et du pneu (12) ; et
un moyen (34) pour commander sélectivement le mouvement de l'outil (38) le long de l'un de la pluralité de trajets prédéterminés correspondant à la taille de la jante (14) et du pneu (12) en réponse au signal électrique.

19. Appareil selon la revendication 18, comprenant en outre :
un support d'outil (42) mobile le long de celui sélectionnable de la pluralité de trajets prédéterminés ; et l'outil (38) pouvant être fixé au support d'outil (42), l'outil (38) pouvant être orienté indépendamment du trajet sélectionné parmi la pluralité de trajets prédéterminés pour le support d'outil (42).

20. Appareil selon la revendication 18, comprenant en outre :
un support de pièce (18) destiné à positionner la jante (14) à un emplacement prédéterminé par rapport à l'outil (38) et à positionner le pneu (12) selon une orientation prédéterminée par rapport à la jante (14).

21. Appareil selon la revendication 1, comprenant en outre:
l'outil de montage de talon (38) possédant une partie d'engagement de jante (56) et une partie d'engagement de pneu (60) destinées à forcer le talon (26, 28) du pneu (12) sur la jante (14) en réponse à un mouvement commandé de l'outil (38) par rapport à la jante (14) et au pneu (12), l'outil (38) étant mobile le long d'une pluralité de trajets prédéterminés correspondant à une taille de la jante (14) et du pneu (12) à monter ; et
un moyen (34) destiné à commander électriquement le mouvement de l'outil (38) et à sélectionner électriquement l'un de la pluralité de trajets prédéterminés en réponse à la taille de la jante (14) et du pneu (12) à monter.

22. Appareil selon la revendication 21, comprenant en outre :
un support d'outil (42) destiné à un mouvement commandé le long de l'un d'une pluralité de trajets prédéterminés ; et l'outil (38) pouvant être fixé au support d'outil (42), l'outil (38) étant orientable indépendamment du trajet sélectionné parmi ladite pluralité de trajets prédéterminés pour le support d'outil (42).

23. Appareil selon la revendication 22, comprenant en outre :
un moyen pour commander le mouvement du support d'outil (42) et pour sélectionner l'un de la pluralité de trajets prédéterminés en réponse à une taille de la jante (14) et du pneu (12) à monter.

24. Procédé de montage d'un pneu flexible sur une jante, **caractérisé par** les étapes suivantes :
orienter un outil de montage de talon (38) mobile le long d'une pluralité de trajets prédéterminés ;
générer un signal électrique correspondant à une taille de la jante (14) et du pneu (12) ; et
commander sélectivement le mouvement de l'outil (38) le long de l'un de la pluralité de trajets programmables prédéterminés correspondant à la taille de la jante et du pneu, en réponse au signal électrique.

25. Procédé selon la revendication 24, comprenant en outre les étapes suivantes:
déplacer un support d'outil (42) le long du trajet sélectionnable parmi la pluralité de trajets prédéterminés ; et
orienter l'outil (38) indépendamment du trajet sélectionné parmi la pluralité de trajets prédéterminés pour le support d'outil (42), l'outil (38) pouvant être fixé au support d'outil (42).

26. Procédé selon la revendication 24, comprenant en outre l'étape suivante :
positionner la jante (14) à un emplacement prédéterminé par rapport à l'outil (38) et positionner le pneu (12) selon une orientation prédéterminée par rapport à la jante (14) sur un support de pièce (18).

27. Procédé selon la revendication 24, comprenant en outre les étapes suivantes :
déplacer un robot (10) possédant au moins un joint articulé (40) et un poignet (42) avec au moins trois degrés de liberté le long d'un trajet sélectionnable parmi une pluralité de trajets programmables prédéterminés ;
exécuter sélectivement n'importe lequel de la pluralité de trajets programmables prédéterminés pouvant être stockés dans une mémoire avec une unité centrale de traitement (34) ;
orienter l'outil de montage de talon (38) pouvant être relié au poignet (42) du robot (10) en vue d'un mouvement le long du trajet sélectionné parmi la pluralité de trajets programmables prédéterminés du robot (10) avec au moins trois degrés de liberté, indépendamment du trajet sélectionné parmi la pluralité de trajets programmables prédéterminés ;
positionner la jante (14) à un emplacement prédéterminé par rapport au robot (10) et positionner le pneu (12) selon une orientation prédéterminée par rapport à la jante (14) sur un support de pièce (18) ; et
générer un signal destiné au robot (10), correspondant à une taille de la jante (14) et du pneu (12), où l'unité centrale de traitement (34) sélectionne l'un de la pluralité de trajets programmables prédéterminés correspondant à la taille de la jante et du pneu.

28. Procédé selon la revendication 27, comprenant en outre les étapes suivantes :
mesurer une charge sur le joint (40) et le poignet (42) du robot (10) avec au moins un capteur (62) pendant un cycle de montage du pneu ; et
surveiller le au moins un capteur (62) pendant le cycle de montage du pneu afin d'arrêter le mouvement de l'outil de montage de talon (38) en réponse à une charge détectée supérieure à une valeur prédéterminée.

29. Procédé selon la revendication 27, comprenant en outre l'étape suivante :
empêcher la rotation du pneu (12) par rapport à la jante (14) avec une pince d'engagement de pneu (24), lorsque l'outil de montage de talon (38) usine un talon (26, 28) du pneu (12) sur la j ante (14).

30. Procédé selon la revendication 27, comprenant en outre les étapes suivantes:
déplacer l'outil de montage de talon (38) autour d'une périphérie entière de la jante (14) le long d'un premier trajet prédéterminé afin de placer un premier talon (26) du pneu (12) sur la jante (14) ; et
déplacer l'outil de montage de talon (38) autour de la périphérie entière de la jante (14) le long d'un second trajet prédéterminé afin de placer un second talon (28) du pneu (12) sur la jante (14).

31. Procédé selon la revendication 30, comprenant en outre les étapes suivantes :
déplacer l'outil de montage de talon (38) dans une première direction de rotation autour de la périphérie entière de la jante (14) le long du premier trajet prédéterminé ; et
déplacer l'outil de montage de talon (38) dans une seconde direction de rotation le long du second trajet prédéterminé, dans une direction de rotation opposée au premier trajet prédéterminé.

32. Procédé selon la revendication 24, comprenant en outre les étapes suivantes :
déplacer un robot (10) possédant au moins un joint articulé (40) et un poignet (42) le long d'un trajet sélectionnable parmi une pluralité de trajets programmables prédéterminés ;
exécuter sélectivement n'importe lequel de la pluralité de trajets programmables prédéterminés pouvant être stockés dans une mémoire avec une unité centrale de traitement (34) ;
orienter un outil de montage de talon (38) pouvant être relié au poignet (42) du robot (10) en vue d'un mouvement le long du trajet sélectionné parmi la pluralité de trajets programmables prédéterminés du robot (10), indépendamment du trajet sélectionné parmi la pluralité de trajets programmables prédéterminés ;
positionner la jante (14) à un emplacement prédéterminé par rapport au robot (10) et positionner le pneu (12) selon une orientation prédéterminée par rapport à la jante (14), sur un support de pièce (18) ; et
générer un signal destiné au robot (10), correspondant à une taille de la jante (14) et du pneu (12), où l'unité centrale de traitement (34) sélectionne l'un de la pluralité de trajets programmables prédéterminés correspondant à la taille de la jante et du pneu.

33. Procédé selon la revendication 32, comprenant en outre les étapes suivantes :
mesurer une charge sur le joint (40) et le poignet (42) du robot (10) avec au moins un capteur (62) pendant un cycle de montage du pneu ; et
surveiller le au moins un capteur (62) pendant le cycle de montage du pneu afin d'arrêter le mouvement de l'outil de montage de talon (38) en réponse à une charge détectée supérieure à une valeur prédéterminée.

34. Procédé selon la revendication 32, comprenant en outre l'étape suivantes :
empêcher la rotation du pneu (12) par rapport à la jante (14) avec une pince d'engagement de pneu (24), lorsque l'outil de montage de talon (38) usine un talon (26, 28) du pneu (12) sur la jante (14).

35. Procédé selon la revendication 32, comprenant en outre les étapes suivantes :
déplacer l'outil de montage de talon (38) autour d'une périphérie entière de la jante (14) le long d'un premier trajet prédéterminé afin de placer un premier talon (26) du pneu (12) sur la jante (14); et
déplacer l'outil de montage de talon (38) autour de la périphérie entière de la jante (14) le long d'un second trajet prédéterminé afin de placer un second talon (28) du pneu (12) sur la jante (14).

36. Procédé selon la revendication 35, comprenant en outre les étapes suivantes :
déplacer l'outil de montage de talon (38) dans une première direction de rotation autour de la périphérie entière de la jante (14) le long du premier trajet prédéterminé ; et
déplacer l'outil de montage de talon (38) dans une seconde direction de rotation le long du second trajet prédéterminé dans une direction de rotation opposée au premier trajet prédéterminé.
